**Europäisches Patentamt**

**European Patent Office**

**Office européen des brevets**

(11) Numéro de publication : **0 375 516 B1**

# (12) FASCICULE DE BREVET EUROPEEN

(45) Date de publication du fascicule du brevet :
**10.06.92 Bulletin 92/24**

(51) Int. Cl.⁵ : **F16H 7/12**

(21) Numéro de dépôt : **89403479.2**

(22) Date de dépôt : **14.12.89**

(54) **Dispositif de tension par transmission par lien souple à double galet sur bague élastique de torsion.**

(30) Priorité : **16.12.88 FR 8816601**

(43) Date de publication de la demande :
**27.06.90 Bulletin 90/26**

(45) Mention de la délivrance du brevet :
**10.06.92 Bulletin 92/24**

(84) Etats contractants désignés :
**AT BE CH DE ES FR GB GR IT LI LU NL SE**

(56) Documents cités :
**EP-A- 0 114 779**
**US-A- 4 758 208**

(73) Titulaire : **CAOUTCHOUC MANUFACTURE ET PLASTIQUES**
**143 bis, rue Yves Le Coz**
**F-78000 Versailles (FR)**

(72) Inventeur : **Trinquard, Roger**
**3, rue de la Paix**
**Saint-Leger-Des-Vignes F-58300 Decize (FR)**

EP 0 375 516 B1

## Description

L'invention est du domaine des transmissions par lien souple fonctionnant par adhérence mécanique, telles que les courroies trapézoïdales, courroies plates et courroies dites multistries que l'on rencontre sur les moteurs d'automobile. Elle concerne les galets tendeurs exerçant une tension permanente sur lesdites courroies, au moyen d'un bras de levier actionné par un couple élastique de rappel.

Les dispositifs tendeurs connus exercent un effort élastique au moyen d'un galet fou porté par l'extrémité d'un bras oscillant soumis à l'action d'un couple élastique assuré par un ressort. Le plus souvent, le galet roule sur le dos lisse de la courroie sans nécessité d'adhérence mécanique sur celle-ci et le bras de levier tourillonne sur un axe qui porte le dispositif de tension élastique en formant un ensemble défini par la suite comme "galet tendeur".

Quelques exemples répondant à ce type de dispositifs sont décrits par les brevets DE 3.528.442 de la société Daimler-Benz, FR 2.509.408 de Litens Automotive et US 4.472.162 de Dyneer Corporation. Les deux derniers exercent un couple tendeur par ressort de torsion en hélice avec amortissement par des frictions de bague en caoutchouc; le premier exerce le couple élastique par une bague de caoutchouc et en amortit les variations par un frein contrôlé par des détecteurs. De telles dispositions présentent une grande flexibilité, ce qui permet d'assurer au lien souple une tension constante, mais l'amortissement de ses variations est soumis à des aléas d'usure par formation de poudrette ou "virage au gras" de la composition élastomérique utilisée pour l'amortissement par friction. Un dispositif électromagnétique d'amortissement n'est bien sur utilisable qu'en présence d'un équipement de capteurs, coûteux, et des logiciels correspondants.

La demanderesse a obtenu un brevet européen N° 114 779 portant sur un dispositif de ce type également, dispositif dans lequel une bague élastique sert de palier de tourillonnement et de ressort de torsion, caractérisée par les possibilités de réglage obtenues par rotation de la bague fixe sur une douille à encliquetage utilisant la flexibilité axiale de la bague élastique.

L'inconvénient de ces dispositifs de l'art antérieur est, le plus souvent, l'encombrement en longueur nécessaire pour assurer une valeur suffisante au couple de tension.

La présente invention utilise un galet tendeur de ce dernier type, dans lequel le bras oscillant portant le galet fou tourillonne sur la bague élastique qui lui fournit le couple de rappel.

Les dimensions diamétrales restreintes, permises par cette disposition, sont mises à profit dans le dispositif pour situer, concentriquement au palier du bras oscillant, par-dessus la douille fixe de la bague élastique, un second galet fou servant à un nouvel enroulement de la courroie.

Les dispositions relatives des poulies permettent, alors, sans modifier l'emplacement et le mode de fixation des accessoires sur le moteur, l'utilisation de ce nouveau galet pour attribuer, aux deux accessoires qui l'encadrent, un angle d'enroulement sur leur poulie considérablement plus élevé pour la courroie qui les entraîne, bien souvent doublé par rapport au montage des dispositifs de l'art antérieur.

Dans le cas le plus courant, il est utilisé une courroie, ou tout autre lien souple fonctionnant par adhérence mécanique, monté sur trois poulies, l'une motrice, les autres réceptrices, fonctionnant à des vitesses le plus généralement différentes, et, donc, à des efforts tangentiels variés.

Les systèmes mécaniques abandonnant l'art plus antérieur de tension par écartement de l'un des accessoires, demandent, maintenant, une tension élastique par bras mobile portant un galet tendeur, ce qui permet un montage plus rigide des accessoires.

Le galet tendeur est un ensemble pré-monté, à fixer sur le carter du moteur, à peu près nécessairement à l'intérieur de la courroie, dans la zone comprise entre les trois poulies. Par conséquent, le galet fou au bout du bras tendeur s'applique à l'extérieur de la courroie en accroissant l'angle d'enroulement de quelques degrés par rapport à un brin rectiligne, ceci sur deux poulies, sans modifier la géométrie imposée par la position de la troisième.

Dans la présente invention, la géométrie revendiquée utilise, au contraire, l'emplacement accordé à la fixation du palier d'un galet tendeur qui était connu dans les dispositions de l'art antérieur, pour y placer un galet fou de renvoi que seule la technique d'utilisation d'une bague élastique de torsion permet de positionner.

Avec une courroie plus longue de deux décimètres, peut-être, donc plus lourde de quelques 25 à 30 grammes, ce renvoi supplémentaire confère aux deux poulies encadrantes un angle d'enroulement pratiquement toujours supérieur à 180 degrés, alors qu'il était souvent difficile de dépasser 60 degrés, et pratiquement impossible de dépasser 85 degrés pour l'un des accessoires.

Il résulte de ce simple fait que la tension nécessaire au passage d'une puissance donnée se trouve réduite dans une proportion très importante, tous les brins de la trajectoire restant courts, ceci n'affecte pas les régimes vibratoires et une tension, la plus constante possible, est beaucoup plus facile à assurer par le bras tendeur.

En particulier, l'intensité du couple élastique qui nécessitait, dans les dipositifs de l'art antérieur, une longueur importante de la bague en composition élastomérique, élimine, grâce à la réduction de cette longueur, un des reproches principaux d'encombrement pouvant être faits à cette technique. L'amortissement d'une plus faible force élastique devient plus aisé.

Le nouvel ensemble, formé par le galet tendeur et son palier élastique portant un second galet, demeure possible à préparer, hors chaîne de pose, et même à prérégler à la valeur préconisée par le fabricant, grâce à une vis de blocage empêchant le tourillonnement qu'il suffit de retirer après positionnement de la platine support sur le carter du moteur.

L'invention consiste donc dans un dispositif de tension élastique pour transmission par lien souple fonctionnant par adhérence mécanique, comprenant une poulie motrice entraînant au moins deux poulies réceptrices d'axes parallèles, un galet tendeur tournant fou sur l'axe d'un levier comportant un axe de tourillonnement fixe par rapport aux axes des poulies réceptrices, une bague élastique, engendrant un couple élastique de rotation, étant rendue solidaire sur ses faces extérieure et intérieure, d'une part avec l'axe de tourillonnement et d'autre part avec un élément de fixation, comme connu du document EP-A-114779.

L'invention est caractérisée en ce que l'axe de tourillonnement sert de palier, par l'intermédiaire de la bague élastique, à un galet de renvoi, ce qui permet au lien souple de transmission de présenter un angle d'enroulement supérieur à 180 degrés sur chacune desdites poulies réceptrices, autorisant ainsi des tensions beaucoup plus modérées pour les mêmes besoins de transmission de puissance.

L'invention sera mieux comprise à la lecture de la description accompagnant les dessins, dans lesquels :

– La figure 1 montre, par une vue de face du moteur, la disposition des diverses poulies et des galets de renvoi sur une transmission par courroie.

– La figure 2 est une coupe du galet tendeur par l'axe commun à la bague élastique et au second galet de renvoi.

– La figure 3 complète, par ses deux variantes, la figure 2 pour mettre en évidence le positionnement d'une vis de blocage assurant la valeur préconisée du couple tendeur.

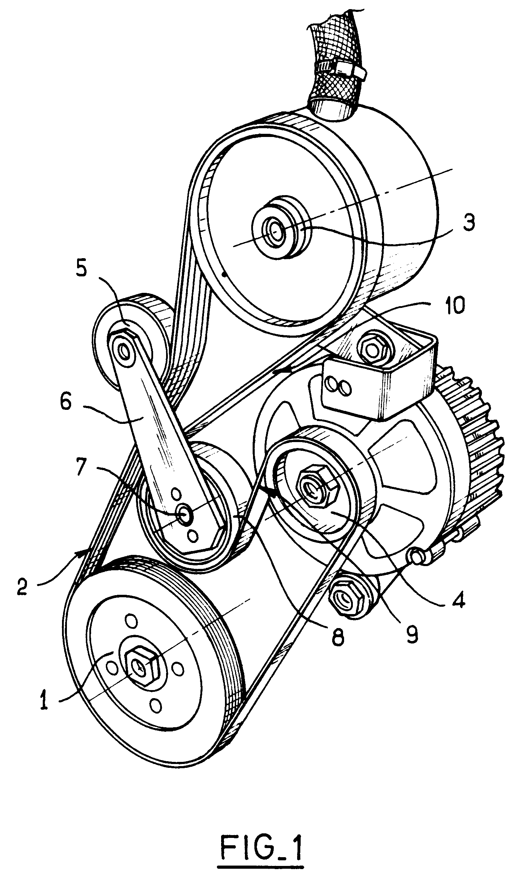

La figure 1 est une vue de face (en légère perspective) d'un moteur d'automobile. S'il est transversal, le plan contenant la courroie est bien entendu parallèle à l'axe du véhicule. Une poulie motrice (1), située sur l'axe du vilebrequin, entraîne par la courroie (2), ici du type multistries, deux accessoires, qui peuvent être, à titre d'exemple non limitatif, une pompe hydraulique d'asservissement sur l'axe de la poulie réceptrice (3) et un alternateur, entraîné, généralement à vitesse plus élevée, par une poulie de petit diamètre (4).

Un galet tendeur (5), tournant fou sur un axe porté par le levier (6), exerce l'effort de tension sur le brin, qui est ici le brin de retour pour la courroie (2), ce qui accroît de quelques degrés à peine l'angle d'enroulement par rapport à un brin rectiligne allant de la poulie motrice (1) à la poulie réceptrice (3).

Le couple de tension est exercé par une bague élastique, non visible, tourillonnant sur l'axe (7), ledit axe portant, également, un galet de renvoi (8).

La courroie (2) fait le tour de ce galet de renvoi par son dos lisse comme sur le galet tendeur (5) et il est bien visible que les brins (9) et (10) de la boucle ainsi formée permettent un angle d'enroulement de la courroie supérieur à 180 degrés autour de la poulie réceptrice (3), aussi bien qu'autour de la poulie de petit diamètre (4).

Ladite poulie de petit diamètre (4) entraîne, le plus souvent, un alternateur, à des vitesses de rotation pouvant dépasser 9000 tours/minute, et son adhérence mécanique présente la limite critique de ce mode de transmission du fait des inerties de rotation, importantes lors des variations de régime rapide. Le montage habituel jusqu'à présent de ces accessoires, par utilisation des dispositifs de l'art antérieur, comprend un angle d'enroulement parfois inférieur à 60 degrés qui détermine la tension minimale nécessaire de la courroie.

Dans la présente invention, bien au contraire, l'angle d'enroulement permis par le passage du brin (9) autour du galet de renvoi (8), d'axe fixe sur le carter moteur, même s'il avoisine 180 degrés, permet une tension minimale réduite de l'ordre d'un facteur trois par rapport à la disposition dans laquelle un brin rectiligne relie directement ladite poulie réceptrice (3) à ladite poulie de petit diamètre (4).

L'angle d'enroulement sur la poulie motrice (1), de l'ordre de 170 à 175 degrés, avec un rayon d'action en général plus élevé que celui des poulies réceptrices, est celui qui devient critique et détermine la tension calculée minimale nécessaire. Il en résulte le couple élastique d'appui du galet tendeur (5) sur le dos de la courroie, qui peut, à titre d'exemple, être réduit dans le rapport deux par rapport aux valeurs nécessitées par les dispositifs de l'art antérieur, améliorant, de ce fait, la durée de vie de la transmission et réduisant l'amplitude des variations de tension aux situations extrêmes.

Expérimentalement, il a été observé que l'amortissement des oscillations vibratoires apporté par la bague de torsion en composition élastomérique précontrainte était dans ce cas satisfaisante.

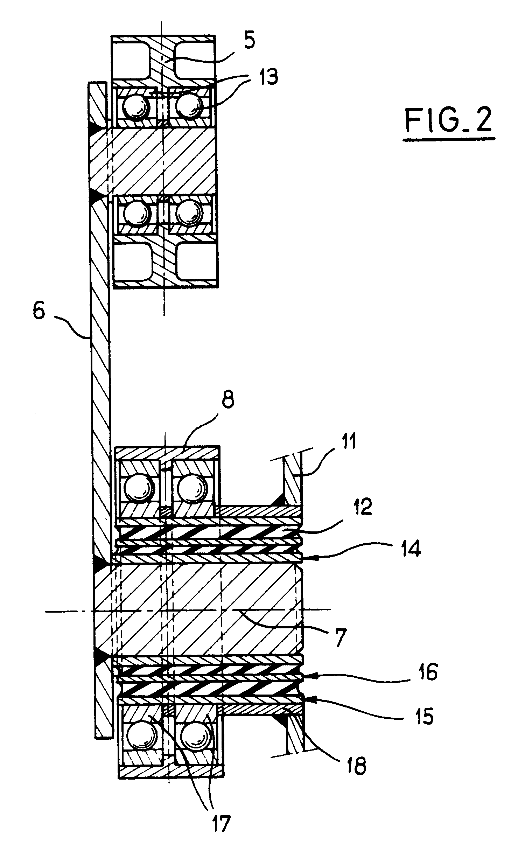

La figure 2 est une coupe du galet tendeur (5), ainsi que du galet de renvoi (8) et de la bague élastique (12) passant par le plan de symétrie du levier (6).

Le tourillonnement sur l'axe (7) solidaire, par exemple par soudure, du levier (6), représenté en tôle d'acier, se fait par déformation élastique de la composition élastomérique de ladite bague élastique (12) qui exerce un couple de rappel par réaction sur la platine de fixation (11).

L'axe du galet tendeur (5) est de même solidaire par soudure du levier (6) et porte par emmanchement la (ou les) bague(s) intérieure(s) du roulement (13).

Dans la variante représentée, le galet tendeur (5) est emmanché, lui aussi, sur deux roulements à billes (13) pour que l'ensemble dispose d'une rigidité plus élevée aux vibrations parasites, mais un seul roulement, à billes, aiguilles ou rouleaux pourrait assurer cette fonction.

La bague élastique (12) est représentée réalisée en deux bagues concentriques en composition élastomérique adhérisée à des armatures intérieures (14), (15) et (16). En effet, une bien meilleure tenue à la fatigue est obtenue en exerçant une précontrainte radiale de la composition élastomérique. Ladite précontrainte s'obtient par rétreint de la bague extérieure (15) ou par dudgeonnage de la bague intérieure (14), ou par l'ensemble des deux techniques comme dans la variante représentée, où la bague intermédiaire (16) reste à un diamètre inchangé et permet, par le frettage ainsi réalisé de la composition élastomérique, d'assurer une rigidité radiale beaucoup plus élevée. Sous ladite précontrainte, la rigidité de torsion élastique peut être abaissée et permettre, ainsi, des courses plus élevées, tandis que l'amortissement peut être accru avec une hystérésis notable.

La bague d'armature intérieure (14) transmet le couple élastique par emmanchement sur l'axe (7), solidaire du bras, qui peut être, éventuellement, cannelé ou moleté dans ce but. Un crantage en bout portant sur un ergot sur le bras (6) pourrait également jouer ce rôle.

De la même façon, la bague extérieure d'armature (15) est rendue solidaire par emmanchement sur un tube (18) faisant partie, par soudure ou par emboutissage, de la platine de fixation (11), qui par boulonnage lors de l'assemblage sur moteur, assure le positionnement de l'ensemble. Comme pour le galet tendeur (5), la bague d'armature extérieure (15) est emmanchée sur le même diamètre que le tube (18) dans le roulement (17) qui porte le galet de renvoi (8).

Il est représenté ici deux roulements à billes (17) pour assurer une meilleure rigidité aux vibrations, mais roulement simple, cage double ou à appuis obliques peuvent jouer le même rôle, compte tenu de ce que la tension permanente jouant sur la courroie (2) produit des réactions sur les galets nettement réduites par rapport aux dispositifs de l'art antérieur. Les bagues formant la surface extérieure du galet tendeur (5) et du galet de renvoi (8) peuvent être en acier ou en aluminium comme représenté, un matériau plastique étant également utilisable, ou encore la cage extérieure d'un roulement standard peut en jouer le rôle, la fonction ne consistant qu'à rouler sur le dos lisse de la courroie (2).

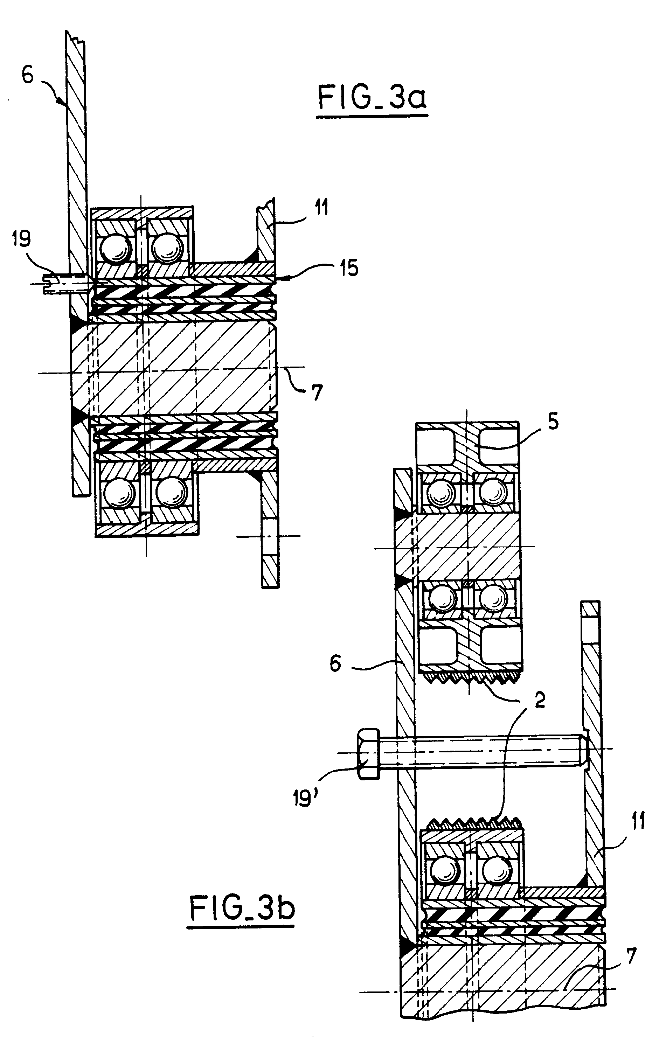

La figure 3 est un complément de la figure 2, indiquant la position d'une vis de blocage (19)(19') qui permet au fabricant de régler la tension qu'il préconise pour l'emploi de la courroie. Le constructeur du moteur, lors de la pose de l'ensemble, positionne la platine de fixation (11) sur le carter du moteur, au moyen de vis et boutonnières, en mettant en appui la courroie sur les différentes poulies.

Ensuite l'enlèvement de la vis (19) (19') libère le couple tendeur dont la valeur reste à la valeur préconisée par le fabricant de l'ensemble.

En vue 3a, la vis de blocage (19) peut être une vis pointeau taraudée dans le bras du levier (6) et qui bloque sa rotation par rapport à l'armature extérieure (15) de la bague élastique, en jouant sur son élasticité axiale. Pour exercer des efforts transversaux plus réduits, la vis de blocage (19') peut être positionnée comme représenté sur la vue 3b. Dans cette disposition, elle enferme, à la livraison, la courroie (2) ainsi rendue indémontable. Ceci peut être un moyen pour accoupler l'ensemble galet-tendeur avec la courroie fournie par le même ensemblier, qui peut ainsi en préconiser la tension de montage, gage de bon fonctionnement et de durée de vie satisfaisante. En rechange, une procédure de rétablissement de la tension préconisée peut, de même, être établie, ne dépendant plus des usures et dispersions de longueur.

En résumé, l'invention apporte une amélioration des conditions d'emploi des transmissions par lien souple fonctionnant par adhérence mécanique, d'une part en réduisant la tension jusque là nécessaire de la courroie, d'autre part en permettant un meilleur contrôle de sa valeur au montage ou en entretien. Elle permet, également, au constructeur du moteur une plus grande liberté dans le montage des accessoires, mais surtout une beaucoup plus grande rigidité vis-à-vis des vibrations parasites, car la seule pièce déplaçable est le levier du galet tendeur, isolé par sa bague élastique des transmissions à des fréquences acoustiques.

L'homme de l'art peut en particulier, utiliser un nombre de galets supérieur à deux, sans sortir du cadre de l'invention.

## Revendications

1. Dispositif de tension élastique pour transmission par un lien souple (2) fonctionnant par adhérence mécanique, le dispositif comprenant une poulie motrice (1) entraînant au moins deux poulies réceptrices (3, 4) avec des axes parallèles, un galet tendeur (5) tournant fou sur l'axe d'un levier (6) comportant un axe de tourillonnement (7) fixe par rapport aux axes des poulies réceptrices, une bague élastique (12), engendrant un couple élastique de rotation, étant rendue solidaire avec sa face extérieure et intérieure, d'une part avec l'axe de tourillonnement (7) et d'autre part avec un élément de fixation (11), caractérisé en ce que ce même axe de tourillonnement (7) sert de palier, par l'intermédiaire de ladite bague élastique (12), à un galet de renvoi (8), ce qui permet audit lien souple (2) de présenter un angle d'enroulement supérieur à 180 degrés sur chacune desdites poulies réceptrices (3) et (4), autorisant ainsi des tensions beaucoup plus modérées pour les mêmes besoins de transmission de puissance.

2. Dispositif de tension élastique pour transmission par lien souple fonctionnant par adhérence mécanique selon la revendication 1, caractérisé en ce qu'un préréglage en usine est réalisé par blocage du couple de rotation élastique du bras porteur du galet tendeur (5) au moyen d'une vis (19), (19') qui sera débloquée après le montage de la transmission.

## Patentansprüche

1. Elastische Spannvorrichtung zur durch mechanischen Kraftschluß bewirkten Kraftübertragung mittels eines flexiblen Riemens (2), mit einer mindestens zwei Abtriebsscheiben (3, 4) mit parallelen Achsen antreibenden Antriebsscheibe (1), einer Spannrolle (5), die sich lose um die Achse eines Hebels (6) dreht, welcher einen gegenüber den Achsen der Abtriebsscheiben feststehenden Lagerzapfen (7) aufweist, sowie einem ein elastisches Drehmoment erzeugenden elastischen Ring (12), der mit seiner Außen- und Innenfläche einerseits an dem Lagerzapfen (7) und andererseits an einem Befestigungselement (11) festgelegt ist, dadurch gekennzeichnet, daß derselbe Lagerzapfen (7) unter Zwischenschaltung des besagten elastischen Rings (12) als Lager für eine Umlenkrolle (8) dient, welche es dem flexiblen Riemen (2) ermöglicht, jede der besagten Abtriebsscheiben (3) und (4) mit einem Winkel von mehr als 180° zu umschlingen, wodurch bei gleichen Kraftübertragungsbedürfnissen wesentlich schwächere Spannungen möglich sind.

2. Elastische Spannvorrichtung zur durch mechanischen Kraftschluß bewirkten Kraftübertragung mittels eines flexiblen Riemens nach Anspruch 1, dadurch gekennzeichnet, daß eine Voreinstellung im Werk durch Blockieren des elastischen Drehmoments des Tragarmes der Spannrolle (5) mittels einer Schraube (19), (19') ausgeführt ist, die nach dem Zusammenbau der Kraftübertragung freigegeben wird.

## Claims

1. Elastic tensioning device for a flexible link (2) transmission operating by mechanical adhesion, the device comprising a drive pulley (1) which drives at least two driven pulleys (3, 4) with parallel axes, a tensioning roller (5) rotating idly on the shaft of a lever (6) comprising a pivot shaft (7) which is fixed relative to the shafts of the driven pulleys, an elastic ring (12) which generates an elastic turning moment, being rigidly connected by its outer and inner faces on the one hand to the pivot shaft (7) and on the other hand to a fixing element (11), characterised in that this same pivot shaft (7) serves as a bearing, by means of said elastic ring (12), for a counter-roller (8), which allows said flexible link (2) to provide an angle of wrap greater than 180 degrees on each of said driven pulleys (3) and (4), thus enabling much lower tensions for the same power transmission requirements.

2. Elastic tensioning device for a flexible link transmission operating by mechanical adhesion according to claim 1, characterised in that preadjustment at the factory is carried out by locking the elastic turning moment of the carrier arm of the tensioning roller (5) by means of a screw (19, 19') which will be released after assembly of the transmission.

FIG_1

FIG_2

FIG_3a

FIG_3b